# EUROPEAN PATENT SPECIFICATION

(11) **EP 0 336 874 B1**
(45) Date of publication and mention of the grant of the patent: **08.12.1993**
(21) Application number: 89630043.1
(22) Date of filing: 03.03.1989
(51) Int. Cl.: C08F 295/00, C08F 36/04, C08F 2/44, C08F 4/70

(54) **Inverse phase polymerization**
Polymerisation in umgekehrter Phase
Polymérisation en phase inverse

(30) Priority: 09.03.1988 US 166087
(43) Date of publication of application: 11.10.1989
(73) Proprietor: THE GOODYEAR TIRE & RUBBER COMPANY, Akron, Ohio 44316-0001 (US)
(72) Inventor: Hsu, Wen-Liang, Copley Ohio 44321 (US); Halasa, Adel Farhan, Bath Ohio 44320 (US)
(74) Representative: Leitz, Paul

(56) References cited:
- EP-A- 0 007 027
- FR-A- 1 325 654
- FR-A- 1 602 321
- FR-A- 2 519 008
- US-A- 2 910 451
- PATENT ABSTRACTS OF JAPAN, vol. 5, no. 184 (C-80)[856], 21st November 1981; & JP-A-56 109 205 (NIPPON GOSEI GOMU K.K.) 29-08-1981

## Description

### Background of the Invention

The physical properties of elastomers can some times be improved by blending crystalline polymers therein. For example, the incorporation of syndiotactic-1,2-polybutadiene (SPBD) into rubber compositions which are utilized in the supporting carcass or innerliner of tires greatly improves the green strength of those compositions. The incorporation of SPBD into halogenated butyl rubbers which are utilized as the innerliner compositions for tires also greatly improves the scorch safety of such compositions. U.S. Patent 4,274,462 further disclosed that pneumatic tires having improved resistance against heat build-up can be prepared by utilizing SPBD fibers in their tread base rubber. The green strength of high cis-1,4-polybutadiene can be improved by incorporating a small amount of crystalline trans-1,4-polybutadiene therein. These are just a few examples of improved properties which can be attained by dispersing crystalline polymers throughout rubbery elastomers.

Such blends of crystalline polymers with rubbery elastomers are typically prepared utilizing standard mixing techniques. For instance, the crystalline polymer could be mixed throughout the rubbery elastomer utilizing a Banbury mixer or a mill mixer. However, these standard mixing procedures have certain drawbacks. These drawbacks include high processing costs, polymer degradation, inadequate mixing, and process limitations. The processing equipment required in order to mix crystalline polymers throughout rubbery elastomers by mastication is expensive and very costly to operate. Such standard mixing procedures result in polymer degradation due to the high shearing forces and high temperatures which may be required for mixing. For instance, it is generally desirable to mix the crystalline polymer throughout the rubbery elastomer at a temperature which is above the melting point of the crystalline polymer. Accordingly, SPBD powder, which is utilized in tire innerliner or carcass compounds, is mixed into the compound utilizing standard mixing procedures at a temperature which is at least as high as the melting point of the SPBD being used. Since high mixing temperatures result in degradation of the rubbery elastomer being utilized as the innerliner or carcass compound, the melting point of the SPBD utilized has typically been limited to no more than about 190°C. In order to limit polymer degradation, the SPBD utilized in such applications typically has a melting point of no more than about 160°C. Even though the green strength of tire carcass compounds containing SPBD increases with the melting temperature of the SPBD, the higher mixing temperature associated with the higher melting SPBD makes its utilization very difficult because of the degradation that occurs utilizing standard mixing techniques. Furthermore, good dispersions of SPBD throughout rubbers are difficult to attain utilizing conventional mixing techniques.

Document JP-A-56-109205 discloses a process for preparing a highly hard and high-modulus diene rubber. 1,3-Butadiene is polymerized in a solution of a polyisoprene having 90% or more cis-1,4 linkage and/or a natural rubber in a hydrocarbon or a halogenated hydrocarbon, by use of a catalyst consisting (A) a Co compound, (B) a compound selected from the group consisting of a trialkylaluminum, a dialkylaluminum hydride, an alkyl lithium compound, etc. and (C) carbon disulfide or phenyl isothiocyanate.

### Summary of the Invention

By utilizing the process of this invention, good dispersions of SPBD, throughout polyisoprene rubber can be easily and economically prepared. The technique of this invention also eliminates polymer degradation associated with high temperature mixing and eliminates many process limitations associated with conventional mixing techniques. By utilizing the process of this invention, an excellent dispersion of a crystalline SPBD matrixes throughout a continuous polyisoprene rubber phase can be achieved and a high degree of crystallinity in the crystalline phase which is undisturbed by processing can be achieved. The microfibers generated in the crystalline phase are reinforcing in all directions with the microfibers having a particle size which is generally within the range of 50 to 200 µm (microns).

The subject invention specifically relates to a process for preparing a highly dispersed blend of a crystalline syndiotactic-1,2-polybutadiene in rubbery polyisoprene which is characterized by (1) polymerizing isoprene monomer in an organic solvent with an alkylaluminum/titanium tetrachloride/ diphenylether catalyst system to produce a polyisoprene cement; (2) polymerizing 1,3-butadiene monomer in the polyisoprene cement with an alkylaluminum/cobalt octanoate/carbon disulfide catalyst system to produce a polyisoprene cement having syndiotactic-1,2-polybutadiene highly dispersed therein; and (3) recovering the highly dispersed blend of the syndiotactic-1,2-polybutadiene in the polyisoprene from the cement.

### Detailed Description of the Invention

The blends of this invention are prepared by synthesizing a crystalline SPBD in a polymer cement of polyisoprene rubber. The crystalline SPBD is prepared by polymerizing 1,3-butadiene monomer under solution polymerization conditions. Such polymerizations are carried out in the presence of a catalyst which results in the formation of the crystalline SPBD polymer desired. The organic solvent in the polyisoprene rubber cement serves as the solvent for the 1,3-butadiene monomer being polymerized and the crystalline SPBD polymer prepared. A polymer cement having the crystalline SPBD dispersed therein is the result of such polymerizations. Essentially homogeneous solutions of the crystalline SPBD and the rubbery polyisoprene in the organic solvent utilized result from such polymerizations. Because the polyisoprene rubber cement containing the crystalline SPBD produced is essentially homogeneous in nature, highly dispersed blends of the crystalline SPBD in the rubbery polyisoprene can be recovered from the organic solvent. In other words, highly dispersed blends of crystalline SPBD in rubbery polyisoprene can be prepared by synthesizing the crystalline SPBD in a rubber cement. The organic solvent can then be removed utilizing conventional techniques, such as coagulation or evaporation, to recover the highly dispersed blend of the crystalline SPBD in the rubbery polyisoprene.

The polymerization medium utilized will normally contain from about 5 weight percent to about 35 weight percent 1,3-butadiene monomer and polymers based upon the total weight of the polymerization medium. Accordingly, the rubber cement ultimately produced will contain from about 5 weight percent to about 35 weight percent polymers based upon the total weight of the rubber cement. The polymerization medium or polymer cement will preferably contain from about 10 percent to about 30 percent monomer and polymers. It will generally be more preferred for the polymerization medium or polymer cement to contain from about 15 weight percent to about 25 weight percent monomer and polymers. In commercial operations, the polymerization medium or rubber cement utilized will typically contain about 20 weight percent monomer and polymer.

The rubbery polyisoprene cement can be prepared by polymerizing 1,3-butadiene monomer in a suitable inert organic solvent. The polymerization of 1,3-butadiene monomer in an organic solvent results in the formation of a polymer cement of the rubbery polyisoprene (a highly viscous solution of the rubbery polyisoprene in the organic solvent).

A highly dispersed blend of the crystalline SPBD in the rubbery polyisoprene can be recovered from the rubber cement containing the crystalline SPBD. The rubber cement containing the SPBD is essentially a homogeneous solution due to mixing which is provided during the synthesis of the SPBD. The highly dispersed blends of this invention can be recovered from the organic solvent in the rubber cement by utilizing conventional techniques. For instance, the highly dispersed blends of this invention can be recovered by coagulation or by evaporation. In many cases, it will be desirable to coagulate the highly dispersed blend from the rubber cement and to subsequently remove remaining solvent by evaporation. The highly dispersed blend which is recovered can then be utilized in manufacturing a wide variety of useful articles.

SPBD can be incorporated into synthetic polyisoprene, in order to improve the green strength thereof. Accordingly, the green strength of polyisoprene rubber which is utilized in building tires can be improved by incorporating SPBD therein. The incorporation of SPBD into polyisoprene rubber which is utilized in the supporting carcass of tires is of particular value because the supporting carcass (reinforcing carcass) of tires is particularly prone to distortion during tire building and curing procedures. The green strength of such blends generally increases with increasing melting temperatures of the SPBD utilized in the blend. Highly dispersed blends of SPBD having a melting point of greater than 190°C can be easily prepared utilizing the technique of this invention. Such blends which are designed for use in the supporting carcass for tires generally contain from about 1 to about 25 phr (parts per hundred parts of rubber) of SPBD.

SPBD can be prepared by polymerizing 1,3-butadiene monomer in the rubber cement in the presence of a catalyst composition which is comprised of: (1) an organometallic compound, (2) a transition metal compound, and (3) carbon disulfide. A detailed description of such catalyst systems is given in U.S. Patent 3,778,424.

The transition metal compounds that can be employed in the catalyst composition include: β-diketone complexes of cobalt; β-keto acid ester complexes of cobalt; cobalt solids of organic carboxylic acids; complexes of halogenated cobalt compounds of the formula CoXₙ, wherein X represents a halogen atom and n represents 2 or 3, with an organic compound; and the like. The organometallic compounds that can be employed in the catalyst composition include: organoaluminum compounds of the formula: AlR₃; organolithium compounds of the formula: LiR; organomagnesium compounds of the formula: MgR₂ and the like. The preferred organometallic compounds are the organoaluminum compounds of the formula: AlR₃ and the organolithium compounds of the formula: LiR.

The catalyst compositions used can be microencapsulated by employing a prereaction process. In this prereaction process the organo-metallic component and the transition metal compound component of the catalyst composition are dissolved in an inert organic solvent with at least one polyene monomer. The ratio of the monomer to the transition metal compound in this catalyst component solution should be at least 1.0 and preferably about 25 by mole. This catalyst component solution is preferably prepared at a temperature of 10°C to 50°C and preferably contains 0.0005 to 1.0 percent by mole, more preferably 0.001 to 0.5 percent by mole of the transition metal compound and 0.001 to 10 percent by mole and more preferably, 0.03 to 5 percent by mole of the organometallic compound based on the amount by mole of monomer that will be polymerized in the main polymerization in the polyisoprene cement.

The polymer produced is composed essentially of syndiotactic 1,2-polybutadiene and generally has a melting point of 70°C. to 210°C. The crystallinity and melting point of the polybutadiene produced by using this process can be controlled by adding hydrocarbon-soluble alcohols, ketones, nitriles, aldehydes or amides to the polymerization mixture.

A catalyst component solution can be prepared by dissolving at least one cobalt compound and at least one organoaluminum compound in an inert organic solvent containing at least one polyene monomer dissolved therein.

The cobalt compound is soluble in the inert organic solvent and is selected from the group consisting of
i. β-diketone complexes of cobalt;
ii. β-keto acid ester complexes of cobalt;
iii. cobalt salts of organic carboxylic acid having 1 to 25 carbon atoms, and
iv. complexes of halogenated cobalt compounds of the formula: CoXₙ
wherein X represents a halogen atom and n represents 2 or 3, with an organic compound selected from the group consisting of tertiary amines, alcohols, tertiary phosphines, ketones and N,N-dialkylamides.

The β-diketone compound to form a complex with a cobalt atom is of the formula: 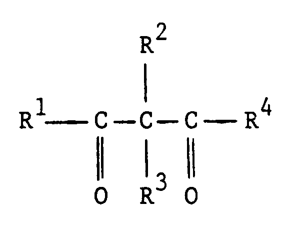
wherein R¹ and R⁴, which are the same as or different from one another, are an alkyl radical of 1 to 6 carbon atoms and R² and R³, which are the same as or different from one another, are a hydrogen atom or an alkyl radical having 1 to 6 carbon atoms. This type of β-diketone complex of cobalt may be cobalt (II) acetylacetonate or cobalt (III) acetylacetonate.

The β-keto acid ester to form a complex with a cobalt atom may be of the formula: 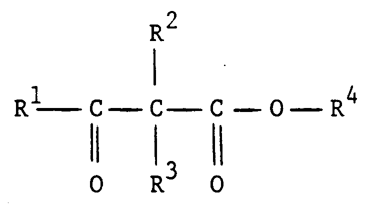
wherein R¹, R², R³ and R⁴ are the same as defined above. This type of cobalt complex may be a cobalt-acetoacetic acid ethyl ester complex. The cobalt salt of organic carboxylic acid may be either cobalt octoate or cobalt naphthenate.

In the ligand compounds capable of forming a complex with a halogenated cobalt compound, the tertiary amine may be pyridine, triethylamine, tributylamine or dimethylaniline, the alcohol may be methyl alcohol or ethyl alcohol, the tertiary phosphine may be trimethyl phosphine, tributyl phosphine or triphenyl phosphine, the ketone may be acetone or methyl ethyl ketone and the N,N-dialkylamide may be N,N-dimethylformamide, N,N-dimethylacetamide, N,N-diethylformamide or N,N-diethylacetamide. The complex of halogenated cobalt is preferably either a complex of cobalt chloride with pyridine or ethyl alcohol.

The organoaluminum compounds which can be used are of the same types as those which are used in the three component nickel catalyst previously described herein for producing high cis-1,4-polybutadiene.

In the preparation of the catalyst component solution, it is desirable for the cobalt compound and the organoaluminum compound to be dissolved in the inert organic solvent containing at least one polyene. Some polyenes that can be used in the formation of the polyene products used to prepare microencapsulated catalysts are 1,3-butadiene, 1,3-pentadiene, isoprene, myrcene, and 1,5-cyclooctadiene. Polyenes in which at least two of the double bonds are conjugated and which have minimal substitution on the double bonds are preferred, particularly 1,3-butadiene. Other olefins which can be used are those which are capable of serving as chelating agents for transition metals, such as 1,5-cyclooctadiene. Polyenes with neither conjugation nor good chelating potential are much less effective. The polyene is preferably used in a ratio by mole of at least 1.0, more preferably, at least 5.0 to the amount by mole of the cobalt compound to be used in the catalyst component solution. The preferred polyenes for use in this invention are 1,3-butadiene, 1,3-pentadiene, isoprene, and myrcene. The most preferred polyene is 1,3-butadiene.

Generally, the larger the ratio of the amount of polyene to the cobalt compound in the catalyst component solution, the higher the activity of the catalyst. However, the activity of the catalyst reaches a maximum value at a ratio by mole of polyene monomer to the cobalt compound used in the catalyst component solution of between 10 and 200. For example, if a molar ratio of polyene monomer to the cobalt compound of 10,000 is employed the activity of the catalyst will be similar to that of the catalyst prepared from a catalyst component solution containing a ratio of polyene monomer to the cobalt compound of from 10 to 200. If the ratio is less than 1.0, the resultant catalyst composition has poor activity.

The catalyst component solution is preferably prepared at a temperature of 10° to 50°C and preferably contains 0.0005 to 1.0% by mole, more preferably 0.001 to 0.5% by mole, of the cobalt compound. 0.001 to 10% by mole, more preferably, 0.03 to 5% by mole of the organoaluminum compound based on the amount by mole of 1,3-butadiene to be polymerized. The ratio by mole of the organoaluminum compound to the cobalt compound is preferably in a range from 0.5 to 50, more preferably, from 0.2 to 10.

In the preparation of the catalyst component solution it is preferred for the cobalt compound to be first dissolved in the inert organic solvent in the presence of the polyene monomer and then for the organoaluminum compound to be added to the solution. However, very satisfactory results can also be obtained when the organoaluminum compound is added first.

In the preparation of this catalyst component solution the organoaluminum compound should not be allowed to come in contact with water. This is because water can completely decompose such organoaluminum compounds. Accordingly, it is preferable that the inert organic solvent to be used to prepare the catalyst component solution be preliminarily dehydrated at least up to a content of water which is insufficient to completely decompose the entire amount of the organoaluminum compound.

It is preferable that the catalyst component solution be prepared using a dehydrated inert organic solvent. However, a trace of water in the inert organic solvent can be present up to a concentration of about 500 ppm (parts per million by weight). In fact, it is believed that the total elimination of water from such a catalyst component solution is undesirable. It is preferred for no more than 200 ppm of water to be present in the inert organic solvent used in the preparation of the catalyst component solution. If the content of water in the inert organic solvent is larger than 500 ppm, the catalyst component solution has to contain a relatively large amount of the cobalt compound and organoaluminum compound. This results in an economic disadvantage. If a sufficient amount of water is present in the inert organic solvent used in the preparation of the catalyst component solution the catalyst can be completely destroyed.

It is desirable to allow the prereaction used in the preparation of the catalyst component solution to run for a period of at least 30 seconds, and more preferably for at least 1 minute before mixing the catalyst component solution with the 1,3-butadiene/water mixture to form the reaction mixture. Longer time periods can be used without the catalyst component solution losing its activity.

After the catalyst component solution is prepared, it can be added to the high cis-1,4-polybutadiene cement containing 1,3-butadiene monomer. Agitation should be provided in order to ensure that the catalyst component solution and monomer are distributed essentially homogeneously throughout the mixture. The polymerization is initiated by mixing carbon disulfide throughout the rubber cement containing the above-described catalyst component solution.

The amount of carbon disulfide that can be added will vary between 0.005 mole percent and 2 mole percent based on the amount of moles of 1,3-butadiene to be polymerized in the rubber cement. More preferably the amount of carbon disulfide added will vary between 0.001 and 1 mole percent based on the amount of moles of 1,3-butadiene to be polymerized in the rubber cement.

The larger the proportion of the carbon disulfide in a range from about 0.0005 to about 0.5% by mole based on the amount by mole of the 1,3-butadiene to be polymerized in the rubber cement, the larger the yield of the polymer product obtained from the polymerization mixture. However, too large an amount of carbon disulfide, for example, larger than 0.5% by mole, causes a decrease in the polymer yield.

The crystallinity and melting point of the SPBD produced can be controlled by adding alcohols, ketones, nitriles, aldehydes, or amides to the polymerization mixture. A detailed description of the agents and techniques that are used to control crystallinity and melting points of SPBD is given in United States Patents 3,901,868 and 4,153,767.

The 1,3-butadiene monomer in the polymerization mixture is converted into SPBD while agitating the rubber cement. If the use of an antioxidant is desired, it may be added conveniently at the beginning of the polymerization. This polymerization of 1,3-butadiene monomer can be carried out at a temperature from about -20°C to about 90°C. It is preferable for the polymerization temperature to be carried out at 0°C to 40°C. The most preferred polymerization temperature is about 10°C.

This polymerization can be carried out either under a normal pressure or in a pressurized system. This polymerization of 1,3-butadiene monomer into SPBD can be carried out under a nitrogen atmosphere with good results. Such a polymerization can be run for a period of from about 1 to about 30 hours. It is generally preferred for the polymerization to be run for about 10 hours. However, the optimum polymerization time will vary greatly with the polymerization temperature, catalyst, the amount of catalyst used, etc. This polymerization of 1,3-butadiene monomer into SPBD can, of course, be done on a continuous basis.

After the SPBD has been synthesized in the rubber cement, the rubbery polyisoprene and the SPBD can be simultaneously coagulated from the organic solvent in the rubber cement. The blend recovered is a highly dispersed blend of the crystalline SPBD through the rubbery polyisoprene. Residual amounts of solvent in the blend can, of course, be removed by evaporation or other suitable techniques.

This invention is illustrated by the following example. Unless specifically indicated otherwise, parts and percentages are given by weight.

### Example 1

In this experiment a highly dispersed blend of SPBD in high cis-1,4-polyisoprene was prepared. In the procedure used 500 ml of an 11.1% isoprene in hexane solution containing 36 g of isoprene was added to a quart (0.946 liter) polymerization bottle. The polymerization was initiated by adding a triisopropylaluminum/titanium tetrachloride/diphenyl ether catalyst system (0.9 Al/Ti, 0.6 diphenyl ether/Al, 0.34 M TiCl₄). The polymerization was conducted at 50°C for a period of 4 hours. This resulted in the formation of a cis-1,4-polyisoprene cement. After the cis-1,4-polyisoprene cement was allowed to cool to room temperature, 100 ml of a 18.6% solution of 1,3-butadiene in hexane was added to it. Polymerization was initiated by adding 8 ml of a 25% triisopropylaluminum solution, 2.5 ml of a 0.042 M cobalt octanoate solution, and 0.2 ml of carbon disulfide. The polymerization was allowed to continue at room temperature with the polymerization bottle being shaken for a period of 16 hours. The polymerization was short stopped and stabilized. The blend recovered was dried in a vacuum oven. The blend recovered weighed 43 g and contained 7.2% SPBD. It was determined to have a glass transition temperature of -65°C and a melting point of 202°C.

## Claims

1. A process for preparing a highly dispersed blend of a crystalline syndiotactic-1,2-polybutadiene in rubbery polyisoprene which is characterized by
(1) polymerizing isoprene monomer in an organic solvent with an alkylaluminum/titanium tetrachloride/diphenylether catalyst system to produce a polyisoprene cement;
(2) polymerizing 1,3-butadiene monomer in the polyisoprene cement with an alkylaluminum/cobalt octanoate/carbon disulfide catalyst system to produce a polyisoprene cement having syndiotactic-1,2-polybutadiene highly dispersed therein; and
(3) recovering the highly dispersed blend of the syndiotactic-1,2-polybutadiene in the polyisoprene from the cement.

## Patentansprüche

1. Verfahren zur Herstellung einer hochdispersen Mischung eines kristallinen syndiotaktischen 1,2-Polybutadiens in kautschukartigem Polyisopren, gekennzeichnet durch
(1) Polymerisieren eines Isopren-Monomers in einem organischen Lösungsmittel mit einem Alkylaluminium/Titantetrachlorid/Diphenylether-Katalysatorsystem, um eine Polyisopren-Kautschuklösung herzustellen;
(2) Polymerisieren eines 1,3-Butadien-Monomers in der Polyisopren-Kautschuklösung mit einem Alkylaluminium/Cobaltoctanoat/Kohlenstoffdisulfid-Katalysatorsystem, um eine Polyisopren-Kautschuklösung mit darin hochdispergiertem syndiotaktischem 1,2-Polybutadien herzustellen; und
(3) Gewinnen der hochdispersen Mischung des syndiotaktischen 1,2-Polybutadiens in dem Polyisopren aus der Kautschuklösung.

## Revendications

1. Procédé pour préparer un mélange fortement dispersé de 1,2-polybutadiène syndiotactique cristallin dans du polyisoprène caoutchouteux, qui est caractérisé par le fait de :
(1) polymériser le monomère d'isoprène dans un solvant organique avec un système de catalyseur d'alkyl-aluminium/tétrachlorure de titane/éther diphénylique pour obtenir un ciment de polyisoprène;
(2) polymériser le monomère de 1,3-butadiène dans le ciment de polyisoprène avec un système de catalyseur d'alkyl-aluminium/octanoate de cobalt/disulfure de carbone pour obtenir un ciment de polyisoprène dans lequel est fortement dispersé du 1,2-polybutadiène syndiotactique, et
(3) récupérer à partir du ciment le mélange fortement dispersé du 1,2-polybutadiène syndiotactique dans le polyisoprène.
